**Europäisches Patentamt**

**European Patent Office**

**Office européen des brevets**

(19)

(11) Veröffentlichungsnummer: **0 113 114**
**B1**

(12) **EUROPÄISCHE PATENTSCHRIFT**

(45) Veröffentlichungstag der Patentschrift:
23.07.86

(51) Int. Cl.4: **C 08 L 27/06**

(21) Anmeldenummer: **83113126.3**

(22) Anmeldetag: **27.12.83**

(54) **Thermoplastische Masse.**

(30) Priorität: **31.12.82 DE 3248731**

(43) Veröffentlichungstag der Anmeldung:
**11.07.84 Patentblatt 84/28**

(45) Bekanntmachung des Hinweises auf die Patenterteilung:
**23.07.86 Patentblatt 86/30**

(84) Benannte Vertragsstaaten:
**BE DE FR GB NL**

(56) Entgegenhaltungen:
**EP-A-0 025 544**
**FR-A-2 292 741**

(73) Patentinhaber: **HOECHST AKTIENGESELLSCHAFT,
Postfach 80 03 20, D-6230 Frankfurt am Main 80
(DE)**

(72) Erfinder: **Fleischer, Dietrich, Dr., Seitersweg 19,
D-6100 Darmstadt (DE)**
Erfinder: **Weber, Eckhard, Dr., Am Kalkofen 35,
D-6237 Liederbach (DE)**
Erfinder: **Brandrup, Johannes, Dr., Am Allersberg
6, D-6200 Wiesbaden (DE)**

**Beschreibung**

Es ist bekannt, daß Fluorpolymere und insbesondere Polytetrafluoräthylen einen sehr geringen Gleitreibungskoeffizienten besitzen und deshalb als Zusats in Mengen von 10-30 Gew.-Teilen zu anderen Kunststoffen empfohlen werden, um die Gleiteigenschaften von daraus geformten Gegenständen günstig zu beeinflussen. In diesem Falle wird das Fluorpolymere (Polytetrafluoräthylen) als Füllstoff eingesetz.

So wird in der DE-AS 12 86 302 der Zusatz von Polytetrafluoräthylen zu anderen organischen Polymeren, darunter auch Polyvinylchlorid (PVC) beschrieben, um die Verarbeitungseigenschaften und die Schmelzviskosität dieser Polymeren zu steuern. Voraussetzung hierfür ist gemäß der Lehre dieser DE-AS, daß das Polytetrafluoräthylen in mikro- oder untermikrofasriger Form vorliegt und der Hauptantaeil der Polytetrafluoräthylen-Teilchen nach dem Vermischen mit einem Polymeren im Durchmesser unter den Auflösevermögen eines optischen Mikroskopes liegt. Eine weitere Voraussetzung für die Verwendung von Polytetrafluoräthylen-Teilchen gemäß dieser Druckschrift besteht darin, daß die Polytetrafluoräthylen-Teilchen die Fähigkeit haben müssen, aneinanderzuhaften und eine zusammenhängende Masse zu bilden. Polytetrafluoräthylen-Teilchen, die nicht aneinanderhaften, sind danach nicht geeignet. Die vorgeschriebene feine Dispergierung des Polytetrafluoräthylens geschiet durch intensive Mahlung des mit Polytetrafluoräthylen vermischten Polymeren im schmelzflüssigen Zustand und wäre schon aus diesem Grund fü die Technik der PVC-Dry-Blend-Herstellung vollkommen ungeeignet.

Nach der DE-OS 16 94 338 sollen die Verarbeitungseigenschaften von PVC dadurch verbessert werden, daß die Einzelteilchen des pulverförmigen PVS's mit ausgewählten Polymerüberzügen umhüllt werden. Bevorzugte Überzugspolymere sind hierbei Fluorkohlenstoffpolymere. Zur Umhüllung der PVC-Teilchen werden diese mit einem fluorhaltigen Monomeren überzogen, das dann in geeigneter Weise, z.B. mit org. Peroxyden, polymerisiert wird.

Eine solche Verfahrensweise zur Verbesserung des Verarbeitungsverhaltens von PVC ist sehr umständlich und aufwendig und steht dem praktischen Einsatz von Fluorkohlenstoffpolymeren zu diesem Zwecke entgegen, zumal Tetrafluoräthylen mit einem Kochpunkt von -76° nach der Lehre dieser DE-OS nicht ohne Anwendung von Druck in wäßriger Dispersion zu einem polymeren Überzug polymerisiert werden kann.

Es hat auch nicht an Versuchen gefehlt, die schwierig zu verarbeitenden schlagzähen PVC-Massen, durch Zugabe von Gleitmitteln,.z.B. Metall-Stearaten, Polyäthylenwachsen, Fettsäureestern und dergleichen oder anderen Zusätzen im Verarbeitungsverhalten zu verbessern. Neben mäßigen Erfolgen zeigen solche Zusatzstoffe oftmals unerwünschte Nebenwirkungen, die sich z.B. in Oberflächenmarkierungen der Sichtflächen bei extrudierten Profilen Äußern, und unter Umständen zum Ausschwitzen (plate out) neigen oder die Plazifizierung beeinträchtigen. Dies gilt auch für die Versuche, das Verarbeitungsverhalten von PVC/CPE-Mischungen durch Zugabe von feinteiligem Polytetrafluoräthylen zu dieser Mischung zu verbessern. Die Ergebnisse bewegen sich mehr oder weniger im Bereich anderer Verarbeitungshilfsmittel und bringen keine Lösung des vorliegenden Problems.

Aufgabe der Erfindung war es daher, die vorstehend genannten Nachteile ganz oder weitgehend zu vermeiden und insbesondere eine thermoplastische Masse auf Basis von Vinylchlorid-Polymerisat und chloriertem Niederdruckpolyäthylen mit verbesserten Verarbeitungsverhalten, insbesondere bei der Extrusionsverformung bereitzustellen, die sich auch einfach herstellen läßt.

Es wurde nun gefunden, daß sich das angestrebte Ziel in überraschend einfacher Weise erreichen läßt, wenn zunächst das Chlorpolyäthylen allein mit einem Fluorpolymeren gemischt wird, oder wenn - weniger bevorzugt - die Chlorierung des Polyäthylens zur Herstellung des Chlorpoly-Äthylens bereits in Gegenwart eines Fluorpolymeren erfolgt und das so erhaltene Chlorpolyäthylen dann mit dem Vinylchlorid-Polymerisat abgemischt wird.

Die Erfindung betrifft daher eine thermoplastische Masse bestehend im wesentlichen aus:
A) 97 bis 80 Gew.-% Vinylchlorid-Polymerisat und
B) 3 bis 20 Gew.-% eines chlorierten Niederdruckpolyäthylens
dadurch gekennzeichnet, daß vor dem Mischen der Komponenten A) und B) die Komponente B) mit 0,01 bis 2,0 Gew.-%, bezogen auf chloriertes Niederdruckpolyäthylen eines feinteiligen Fluorpolymeren vermischt wird.

Weiterhin betrifft die Erfindung eine thermoplastische Massebestehend im wesentlichen aus:
A) 97 bis 80Gew.-% Vinylchlorid-Polymerisat und
B) 3 bis 20 Gew.-% eines chlorierten Niederdruckpolyäthylens
dadurch gekennzeichnet, daß ein chloriertes Niederdruckpolyäthylen verwendet wird, welches durch Chlorieren von Niederdruckpolyäthylen in wäßriger oder wäßrigsalzsaurer Suspension hergestellt wurde und wobei der Chlorierungsflotte 0,01 bis 2,0 Gew.-%, bezogen auf Polyäthylen, eines feinteiligen Fluorpolymeren zugesetzt wurden, ausgenommen chlorierte Niederdruckpolyäthylene, die erhalten werden durch Chlorierung von Niederdruckpolyäthylen in Gegenwart von 0,3 bis 1,5 Gew.-% eines Polytetrafluoräthylenwachses mit einem Molekulargewicht von $10^4$ bis $10^6$ und einer Teilengggröße von 0,1 bis 10,0 μm sowie zusätzlich noch 0,01 bis 1,1 Gew.-% hydrophobierter Kieselsäure mit einer Teilchengröße von etwa 7 bis 18 nm und 0,5 dis 3,5 Gew.-% eines inerten anorganischen Zuschlagsstoffes mit hohem Absorptionsvermögen für Niederdruckpolyäthylen.

Erfindungsgemäß können grundsätzlich die bekannten Fluorpolymeren gemäß Stand der Technik eingesetzt werden, wobei diese jedoch zweckmäßigerweise bereits entsprechend feinteilig sein und eine mittlere Teilchengröße im Bereich von 0,05 bis 50μm, vorzugsweise 0,1 bis 10μm aufweisen sollten. Das Fluorpolymere kann dabei sowohl in Pulverform als auch in Form von Dispersionen verwendet werden: im letzteren Falle ist das

2

Dispersionsmedium vorzugsweise eine mit PVC und Chlorpolyäthylen gut verträgliche organische Flüssigkeit, wie beispielsweise eine wäßrige Lösung des Ammoniumsalzes der Perfluornctansäure oder etwa Dioctylphthalat udgl.. Solche Dispersionen können einen Gehalt an Fluorpolymeren (bezogen auf die Gesamtdispersion) von 10 bis 50 Gew.-%, vorzugsweise 15 bis 25 Gew.-% besitzen: die Teilchengröße liegt dabei zumeist im Bereich von 0,1 bis 10 um, vorzugsweise 0,2 bis 4μm.

Unter dem Begriff "Fluorpolymere" seien hier solche Polymeren verstanden, die vorzugsweise mindestens 50 Gew.-%, insbesondere mindestens 70 Gew.-%, bezogen auf das Polymere, an Fluorolefin-Einheiten enthalten und die thermoplastische Eigenschaften aufweisen. Als Fluorolefine seien hier beispielsweise Tetrafluoräthylen, Trifluorchloräthylen, Vinylfluorid und Vinylidenfluorid genannt und als entsprechende Polymere beispielsweise Polytetrafluoräthylen, Polytrifluorchloräthylen, Polyvinylfluorid und Polyvinylidenfluorid, sowie entsprechende Copolymere, welche Gemische derartiger Fluorolefin-Einheiten und/oder Einheiten enthalten, die sich beispielsweise von Hexafluorpropen oder von Olefinen, wie Äthylen, sowie von fluorierten Äthern, insbesondere Perfluor(alkylvinyl)-äthern wie Perfluorpropylperfluorvinyläther ableiten. Derartige Homo- und Copolymere sind beispielsweise in der DE-OS 2.523.147 beschrieben.

Bevorzugt handelt es sich erfindungsgemäß bei dem Fluorpolymer um ein Homopolymerisat des Tetrafluoräthylens ca. 0,7·10$^1$ bis ca 10$^{11}$ Pa.s, vorzugsweise 10$^2$ bis 10$^7$ Pa.s (bei 380°C und 200 kp/cm$^2$) liegt. Es können aber auch entsprechende Tetrafluoräthylen - Copolymerisate mit thermoplastischem Charakter eingesetzt werden, die vorzugsweise mindestens 50 Gew.-%, insbesondere mindestens 70 Gew.-%, bezogen auf das Polymere, an Tetrafluor-Copolymerisate sind beispielsweise in der vorstehend erwähnten DS-OS 2.523.147 beschrieben.

Die erfindungsgemäß besonders bevorzugten Tetrafluoräthylen-Polymerisate stellen dabei sogenannte Fluorcarbonwachse dar, also Tetrafluoräthylen-Homopolymerisate oder - Copolymerisate, wobeierste bevorzugt sind, mit Schmelzviskositäten im Bereich von etwa 0,7·10$^1$ bis etwa 1·10$^7$ Pa.s, vorzugsweise 10$^2$ bis 1,5. 10$^3$ Pa.s (380°C und 200 kp/cm$^2$). Derartige Fluorcarbonwachse sind beispielswiese in der DS-AS 2 235 885 und der darin zitierten Literatur beschrieben. Typische Polytetrafluoräthylenwachse haben z.B. die nachstehenden Eigenschaften:

Schüttdichte (g/l): ≈300 bis ≈ 450
Teilchengröße (μm): ≈ 0,1 bis ≈ 6
Dichte (g/cm$^3$): ≈ 2,2
Spez. Oberfläche (m$^2$/g): ≈14 bis ≈ 5,0
Schmelzpunkt (°C): = 327
Schmelzvisosität (Pa.s.): ≈1,5.10$^3$ bis ≈ 10$^2$
Molekulargewicht: ≈3.10$^1$ bis ≈ 2.10$^5$ Die Abmischung des Chlorpolyäthylens mit dem Fluorpolymeren erfolgt im allgemeinen bei Temperaturen von 20 bis 50 C, vorzugsweise 30 bis 45° in den hierfür üblichen Mischapparaturen. Falls das Fluorpolymere pulverförmig eingesetzt wird, geschieht diese Abmischung beispielsweise in der Weise, daß beide Komponenten vorgelegt und dann entsprechend gemischt werden, wobei die Temperatur des Mischgutes in dem vorstehend genannten Temperaturbereich gehalten wird.

Wird das Fluorpolymere in Form einer Dispersion verwendet, so erfolgt diese Mischung in analoger Weise.

Anstelle des Abmischens bzw. Imprägnierens des fertigen Chlorpolyäthylens mit dem Fluorpolymeren - dem erfindungsgemäß bevorzugten Lösungsweg -ist es auch möglich, das Fluorpolymere während der Herstellung des Chlorpolyäthylens auf das Polymerkorn aufzuziehen. Hierzu wird der wäßrigen bzw. wäßrigsalzsauren Suspension bei der in der üblichen Weise durchgeführten Chlorierungsreaktion das Fluorpolymere beispielsweise in Pulverform zugesetzt.

Die erfindungsgemäße thermoplastische Masse besteht zu 97 bis 80 Gew.-%, vorzugseise zu 90 bis 80 Gew.-%, aus Polyvinylchlorid oder einem Copolymerisat des Vinylchlorids mit anderen Comonomeren. Als Comonomere kommen beispielsweise in Frage: Olefine wie äthylen oder Propylen, Vinylester von geradkettigen oder verzweigten Carbonsäuren mit 2 bis 20, vorzugswiese 2 bis 4 Kohlenstoffatomen, wie Vinylacetat, -propionat, -butyrat, 2-Äthylhexoat, -stearat oder Vinylisotridecansäureester; Vinylhalogenide, wie Vinylfluorid, Vinylidenfluorid oder Vinylidenchlorid; Vinyläther wie Vinylmethyläther; Vinylpyridin; ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid, Maleinsäureimid sowie dessen N-Substitutionsprodukte mit aromatischen, cycloaliphatischen sowie ggf. verzweigten, aliphatischen Substituenten; Acrylnitril, Styrol. Es können auch Gemische dieser Monomeren zum Einsatz kommen.

Die Menge an Comonomeren-Einheiten im VC-Copolymerisat kann bis zu 20 Gew.-% betragen, vorzugsweise liegt sie bei 1 bis 5 Gew.-%. Bevorzugt wird Suspensions- oder Masse-PVC eingesetzt.

Der K-Wert des VC-Polymerisates der erfindungsgemäßen Formmasse liegt zumeist im Bereich von 30 bis 80, vorzugsweise 50 bis 75.

Das erfindungsgemäß zu verwendende chlorierte Niederdruckpolyäthylen, dessen Menge in der Formmasse vorzugsweise 10 bis 20 Gew.-% beträgt, ist feinteilig und läßt sich gut homogen mit Vinylchlorid-Polymerisat-Pulvern vermischen.

Es besitzt in der Regel ein mittleres Molekulargewicht R$^w$ von 1 x 10$^4$ bis 12 x 10$^6$, vorzugsweise 6 x IC$^4$ bis 5 x I0$^5$ einen Chlorgehalt von l0 bis 50 Gew.-%, vorzugsweise 25 bis 45 Gew.-%, eine Restkristallinität von 0 bis 40 %, vorzugsweise 0 bis 30 % und speziell 0 bis 20 %, gemessen nach der Differentialthermoanalyse, einen Quellwert (gemäß DE-0S 2.343.902) von 0,1 bis 40 %, insbesondere von 0,l bis 1 %, und einen Rückstandswert (gemäß DE-0S 2.343.982) von 0 bis 80 Gew.-%, vorzugsweise 0 bis 40 Gew.-%. Weiterhin beträgt die

3

Oberflächenharte nach Shore A (DIN 53 505) 40 bis 90⁰, vorzugsweise 45 bis 70⁰. Die mittlere Korngröße des Chlorpolyäthylen-Pulvers liegt im allgemeinen bei 250 bis 500~m, vorzugsweise bei 200 bis 300~m und die Korngrößenverteilung im allgemeinen zwischen 80 % höchstens 500~m und höchstens l0 % kleiner als 50~m, vorzugsweise 80 % höchstens 400~m und höchstens 10 % vorzugsweise kleiner als 100~m. Die Herstellung des erfindungsgemäß eingesetzten Chlorpoly-Äthylens erfolgt in bekannter Weise, also beispielsweise durch Chlorierung in wäßriger Suspension, in Lösung oder in der Gasphase wie etwa in der DE-OS 2.913.855 beschrieben.

Die erfindungsgemäßen Formmassen können die üblichen Zusatzstoffe, wie Stabilisatoren, Antioxydantien, UV-Stabilisatoren, Pigmente, Farbstoffe, Füllstoffe, Verarbeitungshilfsmittel udgl. enthalten, wie sie beispielsweise in der DE-OS 2.456.278, der US-PS 3.641.216 oder in H. Kainer "Polyvinylchlorid und Vinylchlorid-Mischpolymerisate", Springer-Verlag, Berlin, Heidelberg, New York (1965), S. 209 bis 258 und 275 bis 329 beschrieben sind.

Die erfindungsgemäße thermoplastische Masse eignet sich je nach Anteil der chlorierten Niederdruckpolyäthlyene für Profile, Platten, Rohre, Folien und andere Formkörper und ist sehr gut nach der Dry-blend-Technik verarbeitbar.

Die nachstehenden Beispiele sollen die Erfindung näher erläutern.

## I. Herstellung der Formmassen

### Beispiel 1 (Vergleich)

In einer üblichen Heiz-Kühlmischer-Apparatur wurde in der für Hart-PVC gebräuchlichen Verfahrensweise folgende Formmasse als Dry Blend aufbereitet:

90 Gew.-Tl. Suspension-PVC (K-Wert 70)
10 Gew.-Tl. Chlorpolyäthylen (CPE; Chlorgehalt ca. 35 %)
2,0 Gew.-% Barium-Cadmium-Stabilisator (fest) (mindestens 10 % Cadmium-Gehalt)
2 Gew.-% epoxidiertes Sojabohnenöl
0,5 Gew.-% organisches Phosphit
0,3 Gew.-% Oxystearinsäure
0,2 Gew.-% Wachsester
4 Gew.-% Calciumcarbonat
4 Gew.-% Titandioxyd (Rutiltyp)

Die Umdrehungszahl betrug dabei 1200 Upm, die Endtemperatur des Mischgutes 115°C. Alle Feststoffe der vorstehenden Rezeptur - mit Ausnahme von Titandioxyd - wurden vorgelegt; die flüssigen Mischungsbestandteile wurden dann bei 70°C und das Titandioxyd bei 90°C zugegeben.

Die so erhaltene Mischung wurde anschließend auf ihr Verarbeitungsverhalten hin untersucht; vgl. die nachfolgenden Tabellen 1 bis 3.

### Beispiel 2

a) Zur Aufbringung des feinteiligen PTFE direkt auf das Chlorpolyäthylen wurde in eine schnell laufende Heiz-Kühlmischer-Kombination 4 kg Chlorpolyäthylen gemäß Beispiel 1 und 8 g PolytetrafluoräLhylen-Wachs (Molekulargewicht: ca. $10^5$: Schmelzviskosität: 1.5. $10^3$ Pa.see) pulverförmig hinzugefügt. Die Mischerfüllung wurde nun bei ca. 1200 Upm etwa 3 Minuten gemischt bis. die Temperatur auf max. 45°C angestiegen war. Höhere Temperatur hätte zum Agglomerieren des Mischgutes geführt. Das Mischgut wurde dann in den Kühlmischer gebracht und weitere 5 Minuten bei langsamer Drehzahl von ca. 400 Upm gemischt, bis die Temperatur auf 30°C abgesunken war. Das so vorbereitete CPE lag als rieselfähiges Pulver vor; der PTFE-Guehalt, bezogen auf CPE, betrug 0,2 Gew.-%.

b) 10 Gew.-Teile des vorstehend unter a) erhaltenen CPE's wurden dann in der in Beispiel 1 beschriebenen Weise mit 90 Gew.-Teilen Suspensions-PVC (K-Wert 70) sowie den weiteren in Beispiel 1 beschriebenen Zusatzstoffen abgemischt. Anschließend wurde diese Mischung auf ihr Verarbeitungsverhalten hin geprüft (vgl. die nachfolgenden Tabellen 1 bis 3).

Praktisch die gleichen Ergebnisse werden erhalten, wenn anstelle von PTFg-Pulver eine PTFE-Dispersion mit dem Ammoniumsalz der Perfluoroctansäure als Dispergiermittel eingesetzt oder wenn anstelle von PTFE ein Tetrafluoräthylen-Copolymerisat (z.B. ein Tetrafluoräthylen/äthylen-Copolymerisat) verwendet wird. Gleiches gilt auch für den Austausch von PTFE durch ein entsprechendes Polytrifluorchloräthylen oder Polyvinylidenfluorid.

**Beispiel 3** (Vergleich)

Es wurde eine Formmasse nach Beispiel 1 hergestellt mit dem Unterschied, daß 0,02 Gew.-% (bezogen auf 100 Gew.-Teile der PVC/CPE-Mischung) des Polytetrafluoräthylens gemäß Beispiel 2 nachträglich in die fertige PVC/CPE-Mischung eingebracht wurden.

**Beispiel 4** (Vergleich)

Es wurde eine Formmasse nach Beispiel 3 hergestellt, mit dem Unterschied, daß 0,2 Gew.-% des Polytetrafluoräthylens gemäß Beispiel 2 zusätzlich in die fertige PVC/CPE-Mischung eingebracht wurden.

**Beispiel 5**

Es wurde eine Formmasse nach Beispiel 2 hergestellt, mit dem Unterschied, daß das CPE anstelle von 0,02 Gew.-% nun-. mehr 0,5 Gew.-% Polytetrafluoräthylen enthielt.

**Beispiel 6** (Vergleich)

Es wurde eine Formmasse nach Beispiel 3 hergestellt, mit dem Unterschied, daß 0,05 Gew.-% des Polytetrafluoräthylens gemäß Beispiel 2 nachträglich in die fartige PVC/CPE-Mischung eingebracht wurden.

**Beispiel 7** (Vergleich)

Es wurde eine Formmasse nach Beispiel 3 hergestellt, mit dem Unterschied, daß 0,5 Gew.-% des Polytetrafluoräthylens gemäß Beispiel 2 nachträglich in die fertige PVC-OPE-Mischung eingebracht wurden.

**Beispiel 8** (Vergleich)

Es wurde eine Formmasse nach Beispiel 1 hergestellt, mit dem Unterschied, daß zu der fertigen PVO/CPE-Mischung noch 0,5 Gew.-% Calciumstearat als allgemein bekanntes Gleitmittel zugesetzt wurden.

## II. Ausprüfung des Verarbeitungsverhaltens

Die nach den Beispielen 1 bis 8 hergestellten PVC-Dry-Blend-Pulvermischungen wurden auf einem gegenläufigen Doppelschneckenextruder, der als Meßextruder ausgebildet ist und die Möglichkeit bietet, an verschiedenen Meßpunkten die im Zylinder auftretenden Schmelzendrücke zu messen, verarbeitet. Die Schneckenlänge betrug ca. 18 D und der Schneckendurchmesser $D = 63$ mm.

Als Düse wurde eine Mehrlochdüse verwendet und die Schneckendrehzahl betrug 15 Upm.

In der folgenden Tabelle 1 sind die Maßwerte aufgelistet, die Rückschlüsse auf die Verarbeitungseigenschaften der jeweiligen PVC-Mischung geben.

Sowohl aus den Meßwerten für Drehmoment, Stromaufnahme und Maschinenbelastung, sowie an den Drucken im Zylinder läßt sich dabei erkennen, daß die direkte Aufbringung von Polytetrafluoräthylen auf das CPE eine wesentliche Erleichterung der Verarbeitbarkeit des PVC/CPE-Mischungen bewirkt.

Besonders das Absinken des Drehmomentes und der Drücke $P_1$ bis $P_4$ bedeuten ein leichteres Fließen und eine geringere Belastung der Maschinenaggregate.

Ein nachträgliches Einbringen von Polytetrafluoräthylen in die PVC/CPE-Mischung ergibt bei gleichem Polytetrafluor-Äthylen-Gehalt, bezogen auf die Endmischung, nicht den gleichen Effekt. Die Meßwerte liegen höher als bei der direkten Aufbringung des Polytetrafluoräthylens auf das CPE. Erst bei ca. 10-fach höheren Polytetrafluoräthylen-Mengen in der Mischung treten Ähnliche Werte auf.

Zum Vergleich ist auch eine PVCtCPE-Mischung mit einem typisch innerlich wirkenden Gleitmittel wie beispielsweise Calciumstearat angeführt (Beispiel 8). Hier zeigt sich ein völlig anderes Verarbeitungsverhalten wie aus der Zunahme des Drehmomentes und den Zylinderdrücken eindeutig zu suchen ist.

**0 113 114**

**Tabelle 1**

**Einfluß von Polytetrafluoräthylen (PTFE) auf die Verarbeitungsbedingungen von PVC/CPE-Mischungen beim Extrudieren**

| Bei-spiel | Art der Ausrüstung | PTFE-Gehalt in PVC/CPE (%) | Dreh-moment (N.m) | Stromauf-nahme (A) | Lei-stungs-aufnahme (KW) | Druck (bar) | | | |
|---|---|---|---|---|---|---|---|---|---|
| | | | | | | $P_1$ | $P_2$ | $P_3$ | $P_4$ |
| 1* | CPE ohne PTFE | 0 | 230 | 15 | 6 | 15 | 13 | 12 | 192 |
| 2 | 0,2 % PTFE, (direkt auf CPE) | 0,02 | 205 | 13 | 4 | 12 | 12,5 | 10,5 | 170 |
| 3* | 0,02 % PTFE (zum PVC/CPE-Blend) | 0,02 | 230 | 15 | 6 | 15 | 13,5 | 12 | 190 |
| 4* | 0,2 % PTFE (zum PVC/CPE-Blend) | 0,2 | 208 | 12 | 5 | 15 | 12,5 | 10 | 160 |
| 5 | 0,5 % PTFE, (direkt auf CPE) | 0,05 | 210 | 12 | 4 | 13 | 12,5 | 10 | 184 |
| 6* | 0,05 % PTFE (zum PVC/CPE-Blend) | 0,05 | 225 | 15 | 6 | 14,5 | 13 | 11 | 190 |
| 7* | 0,5 % PTFE (zum PVC/CPE-Blend) | 0,5 | 205 | 12 | 2 | 12 | 13,5 | 10 | 156 |
| 8* | 0,5 % Calciumstearat (zum PVC/CPE-Blend) | 0 | 240 | 15 | 6 | 16 | 14 | 12 | 205 |

* Vergleichsbeispiele

Zur Erhärtung der beim Verarbeiten der PVC/CPE-Blends auf dem Meßextruder unter Praxisbedingungen erhaltenen Meßwerte wurde ein Teil der in den Beispielen beschriebenen Mischungan auf einem Extrusiometer mit Doppelschnecke ausgeprüft.

Aus der nachstehenden Tabelle 2 ist zu erkennen, daß geringste Mengen von Polytetrafluoräthylan, wenn sie direkt auf das CPE aufgabracht werden, das Drehmoment und die Massedrücke stärker erniedrigen, als wenn die gleiche Menge Polytetrafluoräthylen nachträglich der PVC/CPE-Mischung zugegeben wird.

Erst die 10-fache Menge an Polytetrafluoräthylen bei der Zugabe zur Mischung bringt Ähnliche Drehmoment- und Druckerniedrigung, also eine Bestätigung der in Tabelle 1 angeführten Werte.

**Tabelle 2**

**Einfluß von Polytetrafluoräthylen (PTFE) auf die Verarbeitungsbedingungen von PVC/CPE-Mischungen auf einem Extrusiometer mit Doppelschnecke**

| Bei-spiel | Art der Ausrüstung | Effekt. PTFE-Gehalt im PVC/CPE (%) | Dreh-moment (N.m) | Massedrücke (bar) | | |
|---|---|---|---|---|---|---|
| | | | | Meß-stelle 1 | Meß-stelle 2 | Meß-stelle 3 |
| 1* | CPE ohne PTFE | 0 | 255 | 18 | 213 | 178 |
| 2 | 0,2 % PTFE, | 0,02 | 246 | 15 | 202 | 169 |
| 3* | 0,02 % PTFE (zum PVC/CPE-Blend) | 0,02 | 253 | 18 | 212 | 178 |
| 4* | 0,2 % PTFE (zum PVC/CPE-Blend) | 0,2 | 243 | 14 | 199 | 163 |
| 8* | 0,5 % Calciumstearat (zum PVC/CPE-Blend) | 0 | 260 | 18 | 215 | 185 |

* Vergleichsbeispiele

Meßstelle 1: Vor der Entgasung
Meßstelle 2: Kurz vor der Schneckenspitze (in Richtung Werkzeug)
Meßstelle 3: Im Zwischenstück

6

5. Thermoplastische Masse bestehend im wesentlichen aus A) 97 bis 80Gew.-% Vinylchlorid-Polymerisat und B) 3 bis 20 Gew.-% eines chlorierten Niederdruckpolyäthylens, dadurch gekennzeichnet, daß ein chloriertes Niederdruckpolyäthylen verwendet wird, welches durch Chlorieren von Niederdruckpolyäthylen in wäßriger oder wäßrigsalzsaurer Suspension hergestellt wurde und wobei der Chlorierungsflotte 0,01 bis 2,0 Gew.-%, bezogen auf Niederdruckpolyäthylen, eines feinteiligen Fluorpolymeren zugesetzt wurden, ausgenommen chlorierte Niederdruckpoly-Äthylene, die erhalten werden durch Chlorierung von Niederdruckpolyäthylen in Gegenwart von 0,3 bis 1,5 Gew.-% eines Polytetrafluoräthylenwachses mit einem Molekulargewicht von $10^{44}$ bis $10^6$ und einer Teilchengröße von 0,1 bis 10,0 µm sowie zusätzlich noch 0,01 bis 1,1 Gew.-% hydrophobierter Kieselsäure mit einer Teilchengröße von etwa 7 bis 18 nm und 0,5 bis 3,5 Gew.-% eines inerten anorganischen Zuschlagstoffes mit hohem Absorptionsvermögen für Niederdruckpolyäthylen.

6. Formkörper, hergestellt aus der thermoplastischen Masse gemäß Anspruch 1 bis 5.

## Claims

1. A thermoplastic composition composed essentially of A) 97 to 80 % by weight of a vinyl chloride polymer and B) 3 to 20 % by weight of a chlorinated low-pressure polyethylene, wherein, before the components A) and B) are mixed, the component B) is mixed with 0.01 to 2.0 % by weight, relative to the chlorinated low-pressure polyethylene, of a finely divided fluoropolymer.

2. A thermoplastic composition as claimed in claim 1, wherein the finely divided fluoropolymer is mixed in the form of powder or as a liquid dispersion with the component B).

3. A thermoplastic composition as claimed in claim 1 and/or 2, wherein the fluoropolymer is a polytetrafluoroethylene wax having a melt viscosity of $10^2$ to $1.5 \times 10^3$ Pa.seconds (at 380° C and 200 kp/cm$^2$ load).

4. A thermoplastic composition as claimed in at least one of the claims 1 to 3, wherein the particle size of the fluoropolymer is 0.1 to 10 µm.

5. A thermoplastic composition composed essentially of A) 97 to 80 % by weight of a vinyl chloride polymer and B) 3 to 20 % by weight of a chlorinated low-pressure polyethylene, wherein a chlorinated low-pressure polyethylene which has been prepared by chlorinating low-pressure polyethylene in an aqueous or aqueous hydrochloric acid suspension is used, and wherein 0.01 to 2.0 % by weight, relative to the low-pressure polyethylene, of a finely divided fluoropolymer have been added to the chlorination liquor, excluding chlorinated low-pressure polyethylene which are obtained by chlorinating low-pressure polyethylene in the presence of 0.3 to 1.5 % by weight of a polytetrafluoroethylene wax having a molecular weight of $10^4$ to $10^6$ and a particle size of 0.1 to 10.0 µm, and, additionally, also 0.01 to 1.1 % by weight of silica which has been rendered hydrophobic and has a particle size of about 7 to 18 µm and 0.5 to 3.5 % by weight of an inert inorganic additive having a high absorptive capacity for low-pressure polyethylene.

8. A shaped article produced from the thermoplastic composition according to at least one of the claims 1 to 5.

## Revendications

1. Matière thermoplastique essentiellement constituée A) de 97 à 80% en poids d'un polymère du chlorure de vinyle et B) de 3 à 20% en poids d'un polyéthylène basse pression chloré, matiére caractérisée en ce que, avant de mélanger les composantes A) et B), on a ajouté à la composante B) de 0,01 à 2,0% en poids, par rapport au polyéthylène basse pression chloré, d'un polymère fluoré en fines particules.

2. Matière thermoplastique selon la revendication 1 caractérisée en ce que le polymère fluoré en fines particules est mis en jeu à l'état pulvérulent ou sous la forme d'une dispersion liquide pour être mélangé avec la composante B).

3. Matière thermoplastique selon l'une des revendications 1 et 2, caractérisée en ce que le polymère fluoré est une cire de polytétrafluoréthylène ayant une viscosité à l'état fondu de $10^2$ à $1,5.10^3$ Pa.s (à 380° C et sous une charge de 19,6 MPa).

4. Matière thermoplastique selon l'une quelconque des revendications 1 à 3, caractérisée en ce que la granularité du polymère fluoré est comPrise entre 0,1 et 10 µm.

5. Matière thermoplastique essentiellement constituée A) de 97 à 80% en poids d'un polymère du chlorure de vinyle et B) de 3 à 20% en poids d'un polyéthylène basse pression chloré, matiére caractérisée en ce que le polyéthylène basse pression chloré qu'elle renferme a été préparé par chloration d'un polyéthylène basse pression en suspension aqueuse ou en suspension dans de l'acide chlorhydrique aqueux avec un bain de chloration additionné de 0,01 à 2,0% en poids, par rapport au polyéthylène basse pression, d'un polymère fluoré en fines particules, étant entendu que sont exclus ici les polyéthylènes basse pression chlorés qui ont été obtenus par chloration d'un polyéthylène basse pression en présence de 0,3 à 1,5% en poids d'une cire de polytétrafluoréthylène ayant une masse moléculaire de $10^4$ à $10^6$ et une granularité de 0,1 à 10,0 µ, ainsi que de 0,01 à 1,1% en poids d'une silice hydrofugée ayant une granularité d'environ 7 à 18 nm et de 0,5 à 3,5% en poids d'un additif minéral inerte ayant un grand pouvoir d'absorption pour le polyéthylène basse pression.

6. Objets moulés qui ont été fabriqués avec une matière thermoplastique selon l'une quelconque des revendications 1 à 5.

Zur Erhärtung der beim Verarbeiten der PVC/CPE-Blends auf dem Meßextruder unter Praxisbedingungen erhaltenen Meßwerte wurde ein Teilder inden Beispielen beschriebenen Mischungen auf einem Extrusiometer mit Doppelschnecke ausgeprüft.

Aus der nachstehenden Tabelle 2 ist zuerkennen, daß geringste Mengen von Polytetrafluoräthylen, wenn sie direkt auf das CPE aufgebracht werden, das Drehmoment und die Massedrücke stärker erniedrigen, als wenn die gleiche Menge Polytetrafluoräthylen nachträglich der PVC/CPE-Mischung zugegeben wird.

Erst die 10-fache Menge an Polytetrafluoräthylen bei der Zugabe zur Mischung bringt ähnliche Drehmoment- und Druckerniedrigung, also eine Bestätigung der in Tabelle 1 angeführten Werte.

Der Einfluß der Polytetrafluoräthylen-Präparierung des CPE's gemäß der Beispiele auf die Kerbschlagzähigkeit der damit hergestellten PVC/CPE-Blends wurde geprüft, indem aus den Mischungen mit und ohne Polytetrafluoräthylen behandeltem CPE praxisgemäß Fenster-Profile extrudiert wurden, aus denen dann die Prüfkörper entsprechend DIN 53453 zur Prüfung der Kerbschlagzähigkeit $a_K$ hergestellt wurden.

Aus der Tabelle 3 ist ersichtlich, daß die Kerbschlagzähigkeit von aus CPE modifiziertem PVC hergestellten Profilen durch die Präparierung des CPE's mit Polytetrafluoräthylen nicht gemindert wird. Überraschenderweise werden sogar höhere Kebschlagzähigkeitswerte durch die Polytetrafluor-Äthylen-Präparierung des CPE's erhalten, da ganz offensichtlich die Morphologie der PVC/CPE-Mischung durch den erfindungsgemäßen Zusatz von Fluorpolymerisat scherstabiler wird.

**Tabelle 3**

**Einfluß des Polytetrafluoräthylens (PTFE) auf die Kerbschlagzähigkeit von extrudierten PVC/CPE-Mischungen**

| Material (90 % PVC (K-Wert 70)/ 10 % CPE) | $a_K$ (mJ/mm²) (Max. Zyl.—Temp. = 170°C) | $a_K$ (mJ/mm²) (Max. Zyl.—Temp. = 180°C) |
|---|---|---|
| CPE (34 % Cl.) | 21 | 11 |
| CPE (34 % Cl.) ⁻0,1 % PTFE | 27 | 14 |
| CPE (34 % Cl.) ⁻0,2 % PTFE | 33 | 13 |

**Patentansprüche**

1. Thermoplastische Masse bestehend im wesentlichen aus A) 97 bis 80 Gew.-% Vinylchlorid-Polymerisat und B) 3 bis 20 Gew.-% eines chlorierten Niederdruckpolyäthylens, dadurch gekennzeichnet, daß vor dem Mischen der Komponenten A) und B) die Komponente B) mit 0,01 bis 2,0 Gew.-%, bezogen auf chloriertes Niederdruckpolyäthylen, eines feinteiligen Fluorpolymeren vermischt wird.

2. Thermoplastische Masse nach Anspruch 1, dadurch gekennzeichnet, das das feinteilige Fluorpolymere in Pulverform oder als flüssige Dispersion mit der Komponente B) gemischt wird.

3. Thermoplastische Masse nach Anspruch 1 und 2 dadurch gekennzeichnet, daß das Fluorpolymere ein Polytetrafluor-Äthylen-Wachs mit einer Schmelzviskosität von $10^2$ bis $1,5 \cdot 10^3$ Pa-sec (bei 380°C und 200 kp/cm² Last) ist.

4. Thermoplastische Masse nach Anspruch 1 bis 3, dadurch gekennzeichnet, daß die Teilchengröße des Fluorpolymeren 0,1 bis 10 µm beträgt.